# EUROPEAN PATENT APPLICATION

(11) **EP 2 329 886 A2**
(43) Date of publication of application: **08.06.2011**
(21) Application number: 10193116.0
(22) Date of filing: 30.11.2010
(51) Int. Cl.: B05B 15/12

(54) **Spray booth for coating products**

(30) Priority: 01.12.2009 NO 20093454
(71) Applicant: Bentzen, Roald, 3103 Tonsberg (NO)
(72) Inventor: Bentzen, Roald, 3103 Tonsberg (NO)
(74) Representative: Onsagers AS

(57) **Abstract**

The present invention relates to an automatic spraying system (1) for applying paint, stain, preservative or similar material to different products (5) made of wood, plastic, metal etc., the automatic spraying system (1) comprising an application chamber (2), a plurality of application nozzles which through a piping system, comprising one (4) or more pumps and/or valves, are connected to one or more containers containing paint, stain, preservative or the like. The application chamber (2) is constituted of a hollow and elongate element, where an inlet and an outlet gland (23,24) are arranged at each end of the application chamber (2). The inlet and outlet glands (23,24) are configured as tapering funnels and comprise a closing valve. In the application chamber (2) there is provided a movable guiding and dividing gland (28) which is to support and transport the product through the application chamber. The automatic spraying system further comprises a washing machine (14) and a vacuum unit (11) which, through a separator, are connected to the piping system. A control unit will, through a plurality of valves and/or electrical signals, control the automatic spraying system (1).

## Description

The present invention relates to an automatic spraying system, in particular for industrial applications, wherein the spraying system, through the application of paint, stain, preservative or similar material, is used to surface treat different products made of wood, plastic, metal etc.

Painting systems that are used for treating the aforementioned products are well known in the industry. The systems comprise, inter alia, a booth or chamber that is accessible to an operator of the system, in which booth or chamber there is provided a spraying system that applies paint to a product. Such spraying systems usually consist of a vertical tower that is movable in the longitudinal direction of the booth, the vertical tower having mounted thereto one or more movable and articulated arms. Arranged on the outermost link of the arm is a plurality of adjustable nozzles, which nozzles, through a piping system comprising one or more pumps and valves, are connected to a plurality of containers containing paint. In the booth or chamber there is also provided a device which is designed to support and transport the product through the booth during the application of the paint, which device may, for example, be in the form of a movable trolley or a conveyor belt. Such systems may also comprise a system for extracting air or paint mist from the booth, such that some of the used paint can be recovered.

Such painting systems are illustrated and described in, for example, WO 2007/014815, US 4 181 093 and US 4 911 099.

However, these painting systems suffer from various "defects" and/or drawbacks, since by reason of their design they can only apply paint to three sides of the product (the product is supported by a trolley or a conveyor belt and must thus be turned to enable the last side to be treated), the booths and/or devices for transport and support of the product have heavy deposit build-ups after being used for some time etc. In view of the above, a product must be treated in several operations, and the whole system must be "closed" for cleaning and/or resetting the system for new products. This results in an increase in time used, with an ensuing increase in production costs.

One of the objects of the present invention will therefore be to remedy one or more of the aforementioned drawbacks.

Another object according to the present invention is to provide a spraying system for treating different products, which spraying system is substantially automated.

Another object according to the present invention is to provide a spraying system for treating different products, which is to be capable of applying paint, stain, preservative or similar material to all sides of the product.

A further object according to the present invention is to provide a spraying system for treating different products which is to recycle superfluous paint, stain, preservative or the like.

Yet another object according to the present invention is to provide a spraying system for treating different products which, in one of its operating states, is self-cleaning.

These objects are achieved by means of a spraying system for treating different products as disclosed in the following independent claim 1, where additional features of the invention are set forth in the dependent claims and the description below.

The present invention relates to an automatic spraying system for treating the surfaces of different products, where the products may be made of wood, plastic, metal or the like, or also combinations thereof. The system comprises an application chamber and a plurality of application nozzles arranged in the chamber, where the application nozzles, through a piping system comprising at least a pump and valve, are connected to at least one container of paint, stain, wood preservative or the like. The application chamber is constituted of a hollow and elongate body, where at least one inlet and outlet gland is arranged at each end of the application chamber. A movable guiding and dividing gland is also arranged in the application chamber itself, whilst a plurality of application nozzles are arranged around the whole or parts of the periphery and/or length of the application chamber. The automatic spraying system also comprises a washing machine and a vacuum unit which, through a separator, are connected to the piping system of the automatic spraying system. The automatic spraying system is further connected to a control unit, which control unit is used to control the different components of the automatic spraying system.

In a preferred embodiment of the present invention, the separator is a cyclone separator, but it will be appreciated that other types of separators can also be used.

The application chamber may be of any shape, but is preferably configured as a hollow cylinder, as this shape will not have sharp edges and/or faces on which paint, stain, wood preservative or similar material can "stick", which means that there is far less need to shut down the spraying system because of deposit build-up. This configuration will also mean that the cleaning of the automatic spraying system is reduced during such a shut-down.

The application nozzles which are arranged around the whole or parts of the periphery and/or length of the application chamber are preferably arranged such that a number of application nozzles will apply a material to the product in the product's direction of travel through the application chamber, whilst a number of application nozzles will apply the material to the product against the product's direction of travel through the application chamber. One of skill in the art will know how many application nozzles are to be used and how they are to be arranged around and/or along the application chamber, and therefore this is not described in more detail here.

In a preferred embodiment of the present invention, the inlet and the outlet gland are configured as a tapering funnel, as this design will mean that the product to be treated is guided correctly into the application chamber, and that the product to be treated, through the design of the outlet gland, is subj ected to a laminar or linear air stream over and along the product, such that a major portion of superfluous paint, stain or preservative is removed through and during the treatment, leaving a "controlled" amount of paint, stain or preservative on the product. This air stream may be suitably adjustable.

The funnel of the inlet and outlet gland is furthermore so designed that it is adapted to the product to be treated, and the glands are furthermore preferably removably connected to the application chamber. This will, as mentioned above, ensure that the product to be treated is guided correctly into the application chamber, and that the time it takes to adjust the spraying system for treatment of a new product (of a different shape or size) is substantially reduced. When the spraying system has been used to treat a product of a shape and a certain cross-section, the spraying system according to the present invention can be adjusted rapidly to treat, for example, a new product of a different shape and a larger cross-section, as the inlet and outlet gland used being replaced by a new set of inlet and outlet glands which are adapted to the new product.

In a preferred embodiment of the present invention, the inlet gland comprises a closing valve. When a rear end of a product has been moved past the inlet gland, the closing valve will be able to close the inlet gland, thereby providing/maintaining a vacuum in the application chamber (due to the fact that the vacuum unit extracts air). This vacuum will not, in the short period during which the rear end of the product is moved from an inner surface of the inlet gland and until it leaves the outlet gland, see a noticeable change. This design of the inlet gland will mean that an excess of material on the product will be capable of being "drawn" off, thereby preventing the product from being given an irregular or uneven thickness of the applied material along its length.

The outlet gland preferably does not comprise a closing valve, as it is desirable to provide an inflow of air into the application chamber for a period of time between two products that are to be run through the application chamber (the application chamber is "empty"), the closing valve in the inlet gland will be open between each time a new product is put in place and is to be moved through the application chamber.

In a preferred embodiment of the present invention, there is also provided one or more guiding and dividing glands in the application chamber, the guiding and dividing gland(s) being equipped with a plurality of guide wheels, such that a product with some "skewness" or twist will be capable of being "straightened up" so as to admit of being passed through the opening in the inlet and outlet glands. The guide wheels can then in a known way be arranged so as to be capable of regulation or adjustment.

To be able to remove an excess of material from the product being treated, the application chamber is connected via piping to a vacuum unit and the separator. In addition, at least one filter is expediently arranged beneath the application chamber, the filter being connected via a pipe or the like to the application chamber. In this way, the excess paint, stain, preservative or similar material can, by means of the vacuum unit, be drawn off and out of the application chamber and returned to the separator, the application chamber, filter, separator and vacuum unit thus forming a "closed" system. The filter will prevent coarse objects (chips, bits of the product or the like) that have become loose during treatment of the product from being passed back to a consumption container.

The at least one filter will preferably be a filter that can stop small objects and/or elements, but it will be understood that the filter will be adapted to the product being treated.

The spraying system for treating different products is, in a preferred embodiment of the present invention, connected to an external flocculation system.

The invention will now be described in connection with an embodiment and with reference to the attached figures wherein:
Figure 1 shows a schematic diagram of an automatic spraying system for treating different products according to the present invention;
Figure 2 shows a front view and a side view of an embodiment of an application chamber that is used in the automatic spraying system for treating different products according to the present invention; and
Figure 3 shows further details of the application chamber.

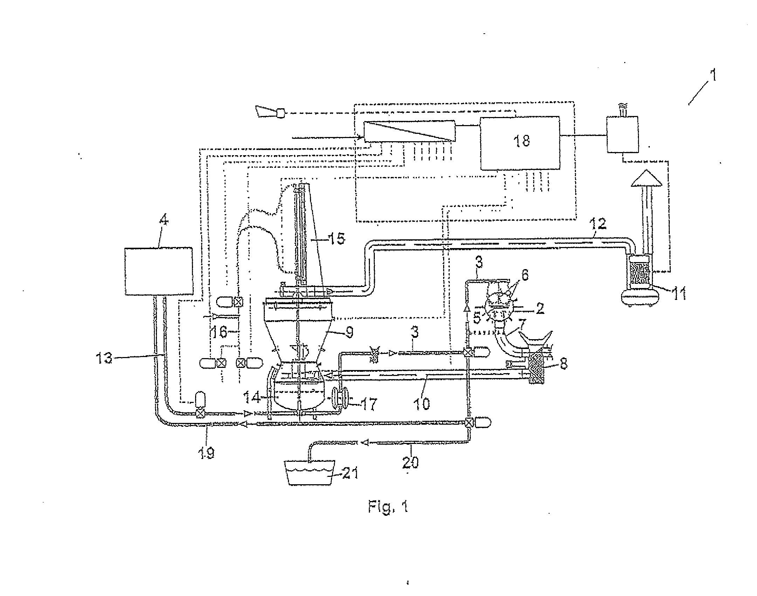

Figure 1 shows a schematic diagram of a preferred embodiment of an automatic spraying system 1 for treating different products 5 according to the present invention, where the automatic spraying system 1 comprises an application chamber 2 which, via a plurality of adjustable application nozzles 6 and a line or pipe 3, is connected to a consumption container 14, which consumption container 14 contains paint, stain, preservative or similar material. The consumption container 14 is also connected via the line or pipe 3 to a diaphragm pump 17. In Figure 1, the application chamber 2 is for the sake of simplicity only shown connected to one line or pipe 3, one storage container 4 and the consumption container 14, but it will be understood that the application chamber 2 can be connected to several lines or pipes 3 and storage containers 4, if the automatic spraying system 1 is used to apply to a product paint or stain of different colours, or that the product 5, for example, a wooden plank, is to be treated with preservative first and then painted.

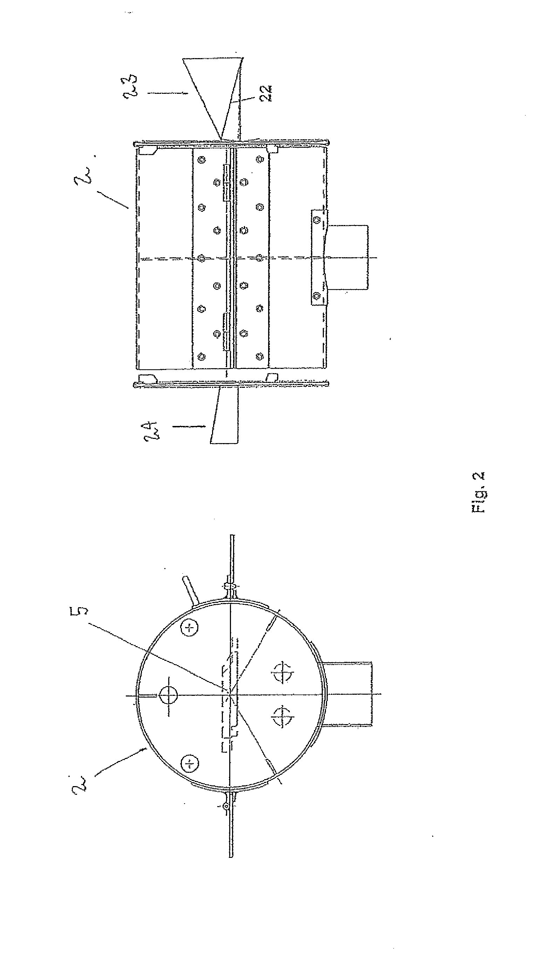

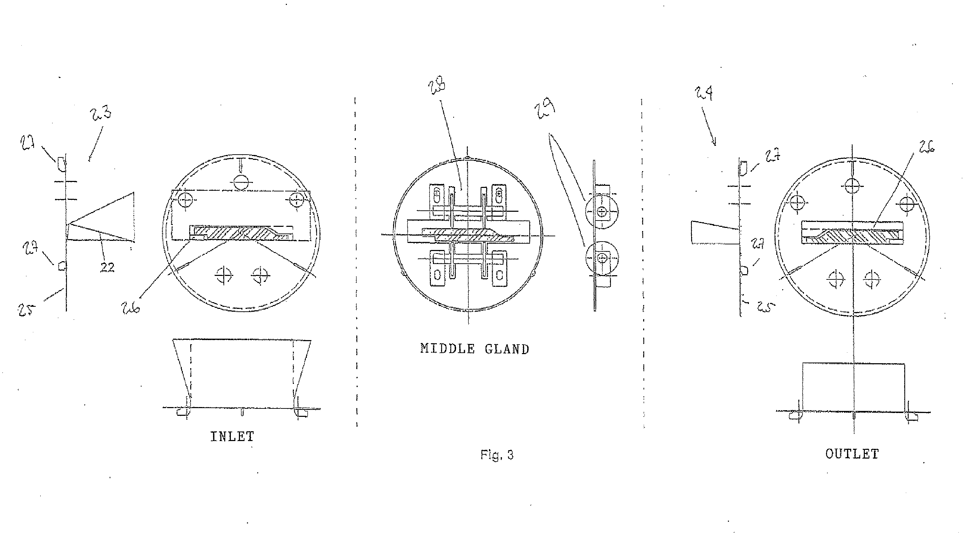

The application chamber 2 is configured as a hollow, cylindrical element, where an inlet gland 23 and an outlet gland 24 are secured at each end of the application chamber 2. The inlet and outlet glands 23, 24 are designed as a tapering funnel, where the funnel is open at both ends. The smallest end of the funnel is adapted to the product 5 to be treated, which facilitates the introduction of the product 5 into the application chamber 2. The inlet and outlet glands 23, 24 are further designed to be detachably connected to the end of the application chamber 2. The inlet gland 23 is also equipped with a closing valve 22 (see also Figures 2 and 3).

The adjustable application nozzles 6 are arranged around and along the periphery of the application chamber 2, such that a complete treatment of the surface of the whole product 5 is achieved. Furthermore, the application nozzles 6 may be arranged at an angle in the application chamber 2, where a number of application nozzles 6 will be arranged pointing against the direction of travel of the product 5 in the application chamber 2, whilst a number of application nozzles 6 will be arranged pointing in the direction of travel of the product 5 in the application chamber. This will mean that the end faces of the product 5 are also treated, and that if the product 5 is a wooden board, the wooden board will also be treated against the grain of the wooden board's surfaces. A conveying device (not shown) will ensure a supply of and feed-in of the product 5 into the application chamber 2.

A filter 8 is connected to the application chamber 2 via a pipe 7, the pipe 7 being arranged on an underside of the application chamber 2 (where the underside of the application chamber 2 is defined as being the lowest point of the application chamber 2 when the automatic spraying system 1 for treatment of different products is fully installed). The filter 8 is to "stop" coarse objects (for example, chips or fragments) that have become loose during the treatment of the product 5, so as to prevent these coarse objects or particles from being passed back to the consumption tank 14.

In this way, an excess of paint, stain, preservative or similar material, which has arisen during the treatment of the product 5, is by means of a vacuum unit 11 extracted from the application chamber 2 and returned to a separator 9, the application chamber 2, filter 8, separator 9 and vacuum unit 11 being connected to form a "closed" piping system.

The filter 8 will then be connected to the separator 9 through a pipeline 10, whilst the vacuum unit 11 will be connected to the separator 9 through a pipeline 12. In addition to this, the separator 9 is connected to the storage container 4 through a pipeline 13, so as to allow the consumption container 14 to be refilled gradually as paint, stain, preservative or the like is used from the consumption container 14.

Thus, with the aid of the vacuum unit 11, negative pressure will be formed in the application chamber 2, which negative pressure will cause the excess of paint, stain, preservative or similar material that has been produced during treatment of the product 5 in the application chamber 2, to be extracted from the application chamber 2 and passed through the filter 8 and into the separator 9. The filter 8 will "stop" and retain large particles (for example, chips etc. from a wooden board), whereby finer particles will follow the excess of material back to the separator 9. The separator 9, which may be a cyclone separator, will then remove finer particles from the drops of paint, stain, preservative or similar material, and the ready treated and recycled excess will be collected in the consumption container 14 in the separator 9. The consumption container 14 in the separator 9 is, as stated above, connected to the storage tank 4, so that the ready treated and recycled excess can be returned to the storage container 4 when this may be desirable, for example, when the spraying system 1 is stopped for cleaning the system and/or when changing colour or material, where the diaphragm pump 17 and the pipeline 19 will be capable of passing the colour or the material back to the storage container 4.

The automatic spraying system 1 for treating different products according to the present invention also comprises a washing machine 15. The washing machine 15 is connected to a water source, and washing water at high pressure will be fed via the pipeline 16 into the separator 9, thereby allowing the separator 9 to be cleaned. This takes place in that nozzles in the washing machine 15 flush the inside of the separator 9 in upward and downward movements. The whole washing process is operated and controlled from the control unit 18.

The other components of the spraying system 1 are washed and cleaned in that water is sent through the pipeline 3 and the pipes 7, 10, which pipes 7 and 10 are connected to the separator 9 and the application chamber 2. The application chamber 2 thus comprises suitable washing nozzles (not shown). In addition to this, the washing water from the washing machine 15 will be connected via the diaphragm pump 17 and the pipeline 20 to an external flocculation system, shown by a waste water vessel 21.

In this way, the automatic spraying system 1 can be "washed" clean in accordance with a given washing program, when for example, a product 5 is to be treated with a different colour, or when the automatic spraying system 1 is cleaned daily.

The paint, stain, preservative material or similar material that is to be applied to the product 5 will, according to the present invention, be applied under pressure, there being disposed between the consumption container 14 and the adjustable application nozzles 6 in the application chamber 2, a diaphragm pump 17 which will pressurise the contents of the consumption container 14 when the contents pass over the diaphragm pump 17.

The automatic spraying system 1 for treating different products according to the present invention is also connected to a control unit 18, where this control unit 18 is used to control and monitor the various elements and/or valves of the automatic spraying system 1 during operation and cleaning.

As will be appreciated, the automatic spraying system 1 for treatment must also comprise a plurality of valves etc. (not shown) so as to be able to control "access" and the connection and disconnection of the various elements of the spraying system 1.

Figure 2 shows a preferred application chamber 2 that is used in the automatic spraying system 1 for treating different products 5 according to the present invention, where the application chamber 2 is shown from in front and from the side. The application chamber 2 comprises an inlet gland 23 and an outlet gland 24, which inlet and outlet glands 23, 24 are configured as a tapering funnel, adapted to the product 5 to be treated. The inlet and the outlet gland 23, 24 are also detachably connected to the application chamber 2. This means that the spraying system 1 for treating different products 5 can be rapidly reset to treat a new product 5, the "old" inlet and outlet glands 23, 24 being removed and the "new" inlet and outlet glands 23, 24 that are adapted to the new product 5 being mounted on the application chamber 2. The inlet gland 23 will further comprise a closing valve 22, so that a "closed" application chamber 2 can be formed, also when a product 5 is not being passed through the application chamber 2. For the sake of simplicity, the application nozzles 6 are not shown in the figure.

Figure 3 shows further details of the inlet and outlet gland 23, 24, where it may be seen that a gland is made of a plate 25, to which plate 25 there is connected a tapering funnel. The plate 25 is configured with an opening 26 which corresponds to a cross-sectional profile of the product 5 to be treated. The tapering funnel will ensure that the product 5 to be treated is guided in correctly through the opening 26 in the inlet gland 23. Similarly, the tapering funnel of the outlet gland 24 will ensure that the product 5 being treated is guided correctly out of the application chamber 2, at a pre-set distance from the opening 26.

The inlet gland 23 also comprises a closing valve 22, such that the opening 26 in the plate 25 can be closed. The closing valve 22 will, when it closes the opening in the plate 25, provide/maintain a vacuum in the application chamber 2. This vacuum will in the short period during which the rear end of the product 5 (i.e., the end that leaves the outlet gland 24 last) is moved from an inner surface of the inlet gland 23 and until it leaves the outlet gland is not altered noticeably. This design of the inlet gland 23 will mean that an excess of material on the product 5 will be capable of being "drawn" off, whereby the product 5 will thus not have irregular or uneven thickness of the applied material along its length.

The outlet gland 24 is not constructed with a closing valve, as it is desirable to provide an inflow of air into the application chamber in the period between two products 5 that are run through the application chamber (before a new product 5 is put into the application chamber 2, the closing valve 22 in the inlet gland will be open).

On a side opposite the tapering funnel, the plate 25 will be made with fastening devices 27 which cooperate with complementary fastening devices (not shown) arranged in the application chamber 2.

In the centre of the application chamber 2 there is arranged a guiding and dividing gland 28, which guiding and dividing gland 28 is equipped with guide wheels 29, such that products 5 with a certain misalignment and twist can be guided towards and through the opening 26 in the outlet gland 24. How the guiding and dividing gland 28 is to be arranged and controlled will be known to those of skill in the art and will therefore not be described in more detail here.

The invention has now been explained with reference to a preferred embodiment. One of skill in the art will understand that several changes and modifications of the illustrated embodiments can be made which fall within the scope of the invention as defined in the following claims.

## Claims

1. An automatic spraying system (1) for treating different products (5) made of wood, plastic, metal or the like, which system (1) comprises an application chamber (2), a plurality of application nozzles which, through a piping system comprising at least one pump and one valve, are connected to at least one container (4) of paint, stain, preservative or similar material,
**characterised in that** the application chamber (2) is constituted of a hollow and elongate element, where an inlet and an outlet gland (23, 24) are arranged at each end of the application chamber (2), the inlet and outlet gland (23, 24) configured as funnels, in which application chamber (2) there is arranged a movable guiding and dividing gland (28) and a plurality of adjustable application nozzles (6), where a washing machine (14) and a vacuum unit (11) are connected, via a separator (9), to the piping system, wherein a control unit, through a plurality of valves and/or electric signals, controls the automatic spraying system (1).

2. An automatic spraying system according to claim 1,
**characterised in that** the application chamber (2) is constituted of a hollow cylinder.

3. An automatic spraying system according to claim 1,
**characterised in that** the guiding and dividing gland (28) comprises a plurality of guide wheels (29) which cooperate with steering or guiding grooves arranged in the application chamber (2).

4. An automatic spraying system according to claim 1,
**characterised in that** inlet and the outlet gland (23, 24) are changeable.

5. An automatic spraying system according to claim 1 or 4, **characterised in that** the inlet gland (23) comprises a closing valve (22).

6. An automatic spraying system according to claim 1,
**characterised in that** the separator (9) is a cyclone separator, comprising a consumption tank

7. An automatic spraying system according to claim 1,
**characterised in that** at least one filter (8) is connected to the piping system between the application chamber (2) and the separator (9).

8. An automatic spraying system according to claim 7,
**characterised in that** the at least one filter (8) is a chip filter or a fine filter.

9. An automatic spraying system according to claim 1,
**characterised in that** a number of the adjustable application nozzles (6) are arranged for spraying-on in the direction of travel of the product (5) through the application chamber (2), whilst a number of the adjustable application nozzles (6) are arranged for spraying-on against the direction of travel of the product (5) through the application chamber (2).

10. An automatic spraying system according to claim 1,
**characterised in that** at least one diaphragm pump (17) is connected to the piping system between the at least one container of paint, stain, preservative or the like, the separator (9) and the application chamber (2).

11. An automatic spraying system according to claim 1,
**characterised in that** a flocculation system is connected to the automatic spraying system (1).

12. An automatic spraying system according to claim 1,
**characterised in that** the washing machine (15) through a pipeline is connected to a water source.
